# EUROPÄISCHE PATENTSCHRIFT

(11) **EP 1 941 395 B1**
(45) Veröffentlichungstag und Bekanntmachung des Hinweises auf die Patenterteilung: **04.08.2010**
(21) Anmeldenummer: 05799132.5
(22) Anmeldetag: 28.10.2005
(51) Int. Cl.: G06F 17/30

(54) **VERFAHREN ZUR STEUERUNG EINES RELATIONALEN DATENBANKSYSTEMS**
METHOD FOR CONTROLLING A RELATIONAL DATABASE SYSTEM
PROCEDE POUR COMMANDER UN SYSTEME DE BANQUE DE DONNEES RELATIONNELLE

(43) Veröffentlichungstag der Anmeldung: 09.07.2008
(73) Patentinhaber: mediareif Möstl & Reif Kommunikations- und Informationstechnologien OEG, 1140 Wien (AT)
(72) Erfinder: MÖSTL, Matthias, A-1160 Wien (AT)
(74) Vertreter: Ellmeyer, Wolfgang
(86) Internationale Anmeldenummer: PCT/AT2005/000430
(87) Internationale Veröffentlichungsnummer: WO 2007/048148

(56) Entgegenhaltungen:
- WO-A-02/31625
- WO-A-02/091271
- WO-A-02/103573
- US-A- 5 519 859
- US-A- 5 600 829
- US-A- 5 930 785
- US-A1- 2004 220 923
- US-A1- 2004 220 928
- US-A1- 2005 076 045
- US-B1- 6 732 091
- US-B1- 6 834 287
- CHAUDHURI S ED - ASSOCIATION FOR COMPUTING MACHINERY: "AN OVERVIEW OF QUERY OPTIMIZATION IN RELATIONAL SYSTEMS" PROCEEDINGS OF THE 17TH. ACM SIGACT-SIGMOD-SIGART SYMPOSIUM ON PRINCIPLES OF DATABASE SYSTEMS. PODS 1998. SEATTLE, WA, JUNE 1 -3, 1998, PROCEEDINGS OF THE ACM SIGACT-SIGMOD-SIGART SYMPOSIUM ON PRINCIPLES OF DATABASE SYSTEMS, NEW YORK, NY : ACM, US, 1. Juni 1998 (1998-06-01), Seiten 34-43, XP000782631 ISBN: 0-89791-996-3

## Beschreibung

Die Erfindung betrifft ein Verfahren zur Steuerung eines relationalen Datenbanksystems durch Ausführung einer Datenbankanfrage in einer relationalen Datenbank, welche als zugeordnete Datenstruktur eine Vielzahl durch Relationen miteinander verbundene Datentabellen enthält, unter Verwendung einer Datenbanksprache, wobei eine Tabelle der Relationen vorhanden ist, und wobei eine abarbeitbare Datenbankanweisung erstellt wird, welche keine relationenbezogenen Operationen enthält und ein Zugriffspfad ermittelt wird, der eine Zugriffsreihenfolge auf die Datenbank konkret vorgibt.

Das Konzept der relationalen Datenbank zeichnet sich durch erhöhte Anwenderfreundlichkeit, Trennung von Programm und Daten, Tabellenstruktur und Datenintegrität durch Redundanzverminderung gegenüber anderen Datenbanken aus.

Es hat mehrere Versuche für Datenbankabfragesprachen, die auf dem Modell der relationalen Datenbank beruhen, gegeben, von denen sich SQL als am besten verwendbar herausgestellt hat. Alle anderen Ansätze wie OLAP, OQL und TSQL wurden im Verlauf der Zeit in den SQL-Standard integriert.

Aus der US 2005/0076045 A1 geht ein Verfahren zur Strukturierung von Daten in einem relationalen Datenbanksystem hervor, mit dem die Auswertungsmöglichkeiten einer multidimensionalen Datenbank verbessert werden, in dem die Möglichkeit der Zusammenfassung jeweils mehrerer Elemente (VALUE HOLDING ITEMS und STRUCTURE ITEMS) einer Dimension zu jeweils einem neuen Element (STRUCTURE ITEM) der Dimension geboten und zugleich ein Verfahren zum Generieren optimierter SQL-Statements durch Zwischenspeicherung von Daten angewandt wird, um die sonst mit anderen SQL-Anweisungen für gleiche Fragestellungen hervorgerufenen hohen Geschwindigkeitsverluste auszugleichen. Es wird ein Weg angegeben, verschiedene Elemente einer Dimension, für welche in Kombination jeweils kein Aggregatswert in der verwendeten Datentabelle gespeichert ist, hierarchisch zusammenzufassen. Die ohne Aggregatswerte existierenden Elemente (STRUCTURE ITEMS) sind entsprechend dem in dieser Druckschrift beschriebenen Verfahren im Gegensatz zu den mit Aggregatswerten existierenden Elementen (VALUE HOLDING ITEMS) frei wählbar und jederzeit änderbar bzw. erweiterbar.

**Die** US 6 732 091 B1 beschreibt ein Verfahren zur Verarbeitung von Datenbankabfragen, so zum Beispiel für SQL, wobei ein bestmöglicher Zugriffsplan aus der Vielzahl aller möglichen, das gleiche Ergebnis liefernden, Zugriffspläne für ein gegebenes Statement auf eine konkrete Datenstruktur gewählt wird. Grundlage dafür ist eine eingeschränkte Form der Tabelle der Relationen, wobei nur NATURAL-JOIN Verknüpfungen zugelassen sind.

In der Praxis hat es sich als nachteilig herausgestellt, daß die Abfragen nur auf eine konkrete Datenstruktur der verwendeten Datenbank im gerade vorhandenen Zustand bezogen sind. Sobald eine Änderung an der Datenstruktur vorgenommen wird, hat dies Änderungen bei der Abfrage zur Folge. Die gleiche Abfrage für eine bestimmte Datenstruktur sieht daher für eine andere Datenstruktur mitunter vollkommen anders aus.

Das Hauptelement einer SQL-Abfrage wird in vielen Fällen durch relationenarientier te Operationen, wie Projektion, Verbund (Join) oder Selektion oder mengenorientierte Operationen, wie Mengenvereinigung, Mengenschnitt oder Mengendifferenz gebildet. Dabei kommt praktisch immer zumindest die Bildung eines kartesischen Produktes von Datentabellen und Einschränkungen unter Zuhilfenahme der Relationenangabe zur Anwendung.

Im nachfolgend angegebenen Beispiel 1 wird der Einfluß der Datenstruktur auf die Formulierung der Abfrage verdeutlicht.

### Beispiel 1:

### Ausgabe aller Firmen aus Wien, sortiert nach Firmennemen, deren Abteilungen und deren Kontaktpersonen

### Datenstruktur, 1:

### Relationen: Firmen <-> Abteilungen <-> Kontaktpersonen

| | |
|---|---|
| SELECT Firmen.*, Abteilungen.*, Kontaktpersonen.* | Verarbeitungsfunktion |
| FROM Firmen, Abteilungen, Kontaktpersonen | kart. Produkt; Relationenangabe |
| WHERE (Firmen.FirmaID = Abteilungen.FirmaNr) | Relationenangabe |
| AND (Abteilungen.AbteilungID = Kontaktpersonen.AbteilungNr) | Relationenangabe |
| AND (Firmen.Ort = "Wien") | Verarbeitungsfunktion |
| ORDER BY Firmen.Name | Verarbeitungsfunktion |

### Datenstruktur 2:

### Relationen: Firmen <-> Geschäftsbereich <-> Abteilungen <-> Kontaktpersonen

| | |
|---|---|
| SELECT Firmen.*, Abteilungen.*, Kontaktpersonen.* | Verarbeitungsfunktion |
| FROM Firmen, Geschäftsbereich, Abteilungen, Kontaktpersonen | kart. Produkt; Relationenangabe |
| WHERE ( Firmen.FID = Geschäftsbereich.FNr) | Relationenangabe |
| AND (Geschaftsbereich.BereichID = Abteilungen.BereichNr) | Relationenangabe |
| AND (Abteilungen. AID = Kontaktpersonen.ANr) | Relationenangabe |
| ORDER BY Firmen.Name | Verarbeitungsfunktion |

Wie zu ersehen ist, liegen je nach Datenstruktur jeweils Relationen vor, die für jede Datenbankanweisung (Statement) immer wieder neu angegeben werden müssen, wodurch sich eine Abhängigkeit von der Datenstruktur ergibt.

Ziel der Erfindung ist es, ein Verfahren zu schaffen, mit dem die Abhängigkeit der Datenbankanweisung von der Datenstruktur beseitigt und eine Vereinfachung für den Anwender erreicht wird.

Weiteres Ziel ist es, eine Verkürzung der Schreibweise zu ermöglichten, wodurch die Übersichtlichkeit der Anfragen stark verbessert wird.

Weiteres Ziel der Erfindung ist es, ein eingangs erwähntes Verfahren anzugeben, mit dem gleichzeitig auf unterschiedliche bestehende Datenstrukturen zugegriffen werden kann, und zwar mit Statements, die nur für eine bestimmte Datenstruktur geschrieben wurden.

Erfindungsgemäß wird dies dadurch erreicht,
- daß die erstellte Datenbankanweisung nur Verarbeitungsfunktionen, Datentabellen und deren Spalten, auf welche die Verarbeitungsfunktionen angewandet werden sollen, und die Reihenfolge sowie die Hierarchiestufe, mit der die Abarbeitung zu erfolgen hat, enthält,
   wobei die Reihenfolge und die Hierarchiestufen der verwendeten Datentabellen in Form eines geordneten Baumes dargestellt werden, und die Wurzel des geordneten Baumes alle Namen der Datentabellen nur der übergeordneten Anfrage enthält, und der Wurzel untergeordnet Unteranfragen als Knoten in die Baumstruktur eingetragen sind, die den Unterabfragen zugeordnete Namen der Datentabellen enthalten,
- daß in der Tabelle der Relationen in an sich bekannter Weise die Relationen als Verbindungen zwischen jeweils zwei Datentabellen über jeweils zumindest ein Schlüsselfeld angegeben sind,
- daß der Zugriffspfad ermittelt wird, indem zunächst über die Tabelle der Relationen zwischen jeweils zwei aufeinander folgenden, ausgewählten Datentabellen ein Teilzugriffspfad auf Basis der zwischen den aufeinander folgenden Datentabellen vorhandenen Relationen berechnet wird, und dann aus allen errechneten Teilzugriffspfaden der Zugriffspfad zusammengesetzt wird,
- daß anhand des mit der Tabelle der Relationen ermittelten Zugriffspfades relationenorientierte Operationen in die angegebene Datenbankanweisung eingesetzt werden, wodurch sich ein SQL-Statement ergibt, welches von jedem den SQL-Standard unterstützenden Datenbanksystem verarbeitet werden kann.

Durch das Weglassen der relationenbezogenen Operationen wird die Datenbankanweisung einerseits verkürzt und dadurch für den Anwender übersichtlich und andererseits in einer von der zugrunde liegenden Datenstruktur unabhängigen Form angegeben, wodurch sich bei der Erstellung und Abarbeitung Geschwindigkeitsvorteile ergeben. Unter Zuhilfenahme der für jede Datenstruktur bekannten Tabelle der Relationen wird der Zugriffspfad, welcher die Zugriffsreihenfolge auf die Datenbank bestimmt, berechnet und kann entweder für die Generierung eines SQL-Statements herangezogen oder direkt für die Abarbeitung herangezogen werden.

In der Tabelle der Relationen sind alle der abgefragten Datenbank zugeordneten Datenstruktur entsprechenden Relationen enthalten und es können weiters frei generierte Relationen enthalten sein.

Eine mögliche Ausführungsform des Erfindungsgemäßen Verfahrens kann darin bestehen, daß zur Ermittlung der Teilzugriffspfade die Tabelle der Relationen in einen auf der Graphentheorie basierenden Graphen eingelesen und unter Zuhilfenahme des gebildeten Graphen die Teitzugriffspfade berechnet werden. Damit kann das erfindungsgemäße Bestimmen des Zugriffspfades durch Anwenden einer an sich bekannten Methode auf einfache Weise durchgeführt werden.

Eine weitere Ausbildung der Erfindung kann darin bestehen, daß anhand des Zugriffspfades relationenorientierte Operationen in die Datenbankanweisung eingesetzt werden. Die eingesetzten relationenorientierten Operationen können dabei so beschaffen sein, daß dadurch die erfindungsgemäße Datenbankanweisung mittels eines Programms in ein gültiges SQL-Statement umgewandelt wird, wodurch dem Anwender, insbesondere bei unübersichtlichen Abfragen, die Mühe erspart bleibt, die gesamte SQL-Datenbankanweisung selbst zu erstellen und anzugeben.

Gemäß einer alternativen Ausführungsform des erfindungsgemäßen Verfahrens kann der ermittelte Zugriffspfad in der Datenbankanweisung separiert angegeben werden, der schrittweise auf die Datentabellen verweist, und zum Zugriff auf die Datenbank diesen Verweisen auf die Datentabellen schrittweise gefolgt wird. Dabei wird die abarbeitbare Datenbankanweisung und der ermittelte Zugriffspfad für die Anfrage direkt verwendet.

Wenn unterschiedliche Datenstrukturen vorliegen, so kann gemäß einer weiteren Ausführungsform der Erfindung eine Umwandlung der für eine Datenstruktur gültigen Datenbankanweisung in eine solche für eine andere Datenstruktur dadurch geschehen,
- daß in einer Datenbankanweisung für eine erste Datenbank mit einer ersten zugeordneten Datenstruktur die zugehörigen ersten relationenorientierten Operationen entfernt werden,
- daß in die von den ersten Relationen befreite Datenbankanweisung zweite relationenorientierte Operationen eingefügt werden, welche zweite relationenorientierte Operationen einer zweiten Datenstruktur, die einer zweiten Datenbank zugeordnet sind, entsprechen,
- daß die Durchführung der Abfrage auf Basis der mit den zweiten relationenorientierten Operationen versehenen Datenbankanweisung durchgeführt wird, indem unter Verwendung der zugehörigen Tabelle der zweiten Relationen die Teilzugriffspfade ermittelt und zu einem Zugriffspfad zusammengesetzt werden.

Insbesondere bei Großanwendem kann auf diese Weise eine kosteneffiziente Zusammenführung von bereits bestehenden Anfrage-Statements für eine bestimmte Datenstruktur mit Statements für eine andere Datenstruktur durchgeführt werden.

Alle vorgenannten Ausführungsformen des erfindungsgemäßen Verfahrens eignen sich in gleichem Maße auch zur programmtechnischen Einrichtung eines relationalen Datenbanksystems, welches ein Computersystem mit einer relationalen Datenbank, eine Datenverarbeitungseinheit und einen Speicher umfaßt, wobei die Datenverarbeitungseinheit nach dem erfindungsgemäßen Verfahren arbeitet.

Ein solches Computerprogramm kann dabei in jeder Form vorliegen, insbesondere aber auch als Computerprogrammprodukt auf einem computerlesbaren Medium, wie etwa Diskette, CD oder DVD, wobei es Computerprogramm-Code-Mittel aufweist, bei dem jeweils nach Laden des Computerprogramms ein Computer durch das Programm zur Durchführung des Verfahrens zur Erzeugung eines erfindungsgemäßen Datenträgers oder elektronischen Trägersignals veranlaßt wird. Es kann aber etwa auch als Computerprogrammprodukt, welches ein Computerprogramm auf einem elektronischen Trägersignal aufweist, bei dem jeweils nach Laden des Computerprogramms ein Computer durch das Programm zur Durchführung des erfindungsgemäßen Verfahrens veranlaßt wird, vorliegen.

Die erfindungsgemäße Aufgabenstellung wird somit auch durch einen Datenträger, oder in äquivalenter Weise durch ein elektronisches Trägersignal, zum Einlesen in ein relationales Datenbanksystem gelöst, bei dem die auf dem Datenträger vorliegende Datenbankanweisung ohne relationenbezogene Operationen erstellt ist, indem nur Verarbeitungsfunktionen, Datentabellen und deren Spalten, auf welche die Verarbeitungsfunktionen angewandet werden sollen, und die Reihenfolge sowie die Hierarchiestufe, mit der die Abarbeitung zu erfolgen hat, angegeben sind, wobei die Reihenfolge und die Hierarchiestufen der verwendeten Datentabellen in Form eines geordneten Baumes dargestellt werden, und die Wurzel des geordneten Baumes alle Namen der Datentabellen nur der übergeordneten Anfrage enthält, und der Wurzel untergeordnet Unteranfragen als Knoten in die Baumstruktur eingetragen sind, die den Unterabfragen zugeordnete Namen der Datentabellen enthalten, daß in der Tabelle der Relationen in an sich bekannter Weise die Relationen als Verbindungen zwischen jeweils zwei Datentabellen Ober jeweils zumindest ein Schlüsselfeld angegeben sind, und daß ein Zugriffspfad auf dem Datenträger enthalten ist, der ermittelt wird, indem zunächst über die Tabelle der Relationen zwischen jeweils zwei aufeinander folgenden, ausgewählten Datentabellen ein Teilzugriffspfad auf Basis der zwischen den aufeinander folgenden Datentabellen vorhandenen Relationen berechnet wird, und dann aus allen errechneten Teilzugriffspfaden der Zugriffspfad zusammengesetzt wird, wobei anhand des mit der Tabelle der Relationen ermittelten Zugriffspfades relationenorientierte Operationen in die angegebene Datenbankanweisung eingesetzt werden, wodurch sich ein SQL-Statement ergibt, welches von jedem den SQL-Standard unterstützenden Datenbanksystem verarbeitet werden kann. Eine weitere Ausführungsform eines erfindungsgemäßen Datenträgers, der Datenbankanweisungen enthält, kann darin bestehen, daß in die Datenbankanweisungen ein nach dem erfindungsgemäßen Verfahren ermittelter Zugriffspfad eingesetzt worden ist, der zur Steuerung des Datenbanksystems durch die Datenbankanweisung zum Zugriff auf die relationale Datenbank verwendet wird.

Alternativ dazu kann der Datenträger zum Einlesen in ein erfindungsgemäßes relationales Datenbanksystem so beschaffen sein, daß der Zugriffspfad, der zur Steuerung des Datenbanksystems durch die Datenbankanweisung zum Zugriff auf die relationale Datenbank verwendet wird, separiert auf dem Datenträger angegeben ist, und der Zugriffspfad schrittweise auf die Datentabellen verweist, und zum Zugriff auf die Datenbank diesen Verweisen auf die Datentabellen schrittweise gefolgt wird.

Ferner betrifft die Erfindung ein Computerprogramm, das Instruktionen aufweist, die zur Durchführung des erfindungsgemäßen Verfahrens eingerichtet sind.

Weiters betrifft die Erfindung ein Computerprogrammprodukt, welches ein computerlesbares Medium mit Computerprogramm-Code-Mitteln aufweist, bei dem jeweils nach Laden des Computerprogramms ein Computer durch das Programm zur Durchführung des erfindungsgemäßen Verfahrens veranlaßt wird.

Die Erfindung betrifft schließlich auch ein Computerprogrammprodukt, welches ein Computerprogramm auf einem elektronischen Trägersignal aufweist, bei dem jeweils nach Laden des Computerprogramms ein Computer durch das Programm zur Durchführung des erfindungsgemäßen Verfahrens veranlaßt wird.

Nachstehend wird die Erfindung anhand der in den Zeichnungen dargestellten Anwendungsbeispiele eingehend erläutert. Es zeigt
Fig.1 eine schematische Darstellung eines geordneten Baumes für die Anwendung des erfindungsgemäßen Verfahrens auf ein Anfragebeispiel (Beispiel 1);
Fig.2 eine schematische Darstellung eines geordneten Baumes für die Ermittlung des Zugriffspfades durch das erfindungsgemäßen Verfahrens in einem weiteren Anfragebeispiel (Beispiel 2);
Fig.3 eine graphische Darstellung einer beispielhaften Tabelle der Relationen für eine erste Datenstruktur;
Fig.4 eine graphische Darstellung einer beispielhaften Tabelle der Relationen für eine zweite Datenstruktur und
Fig.5 eine erweiterte Tabelle der Relationen für ein weiteres Beispiel zur Anwendung des erfindungsgemäßen Verfahrens.

Die Hauptaufgaben eines Datenbanksystems sind das Speichern und Verwalten von Daten und das Bereitstellen von Daten durch Datenbankabfragen.

Die Erfindung bezieht sich dabei auf relationale Datenbanksysteme, die unter Verwendung einer Datenbanksprache einen Zugriff auf die in einer Datenbank gespeicherten Daten ermöglichen. In den gezeigten Ausführungsbeispielen wird die weit verbreitete Datenbanksprache SQL verwendet, die Erfindung ist aber nicht auf die Verwendung derselben beschränkt.

In jeder relationalen Datenbank existiert eine zugeordnete Datenstruktur in Form einer Vielzahl durch Relationen miteinander verbundenen Datentabellen. Darunter werden in Spalten und Zeilen organisierte Daten verstanden, wie sie nachfolgend beispielhaft in den Tabellen 1 bis 10 angegeben sind.

Im Rahmen der Beschreibung wird unter dem Begriff "Zeilenrelation" jeweils die Zeilen einer Tabelle verstanden, also für z.B. Tabelle 1 Firmen(FirmaID; Name, Straße, PLZ, Ort, AnzMitarbeiter) und für Tabelle 2 Abteilungen (AbteilungID, FirmaNr, Abteilungsname). Als "Relationen" werden hingegen die Verbindungen zwischen jeweils zwei Datentabellen über jeweils zumindest ein Schlüsselfeld, also z.B. 1:n; Firmen (Firmald) <-> Abteilungen (FirmaNr) bezeichnet. Die Spalte Firmald in der Tabelle Firmen (Tabelle 1) ist ein Primärschlüssel, für den es in der Tabelle Abteilungen (Tabelle 2) in der Spalte FirmaNr beliebig viele Werte geben kann.

| Tabelle_1: **Firmen** | | | | | |
|---|---|---|---|---|---|
| **FirmaId** | **Name** | **Strasse** | **PLZ** | **Ort** | **AnzMitarbeiter** |
| 1 | Bauer GmbH | Strasse 1 | 1010 | Wien | 59 |
| 2 | Müller GmbH | Strasse 2 | 1020 | Wien | 50 |
| 3 | Schneider GmbH | Strasse 3 | 2000 | Stockerau | 98 |
| 4 | Hannes OEG | Strasse 4 | 8750 | Fohnsdorf | 5 |
| ... | ... | ... | ... | ... | ... |

| Tabelle_2: **Abteilungen** | | |
|---|---|---|
| **AbteilungId** | **FirmaNr** | **Abteilungsname** |
| 1 | 1 | Marketing |
| 2 | 1 | Personal |
| 3 | 1 | Forschung |
| 4 | 2 | Marketing |
| 5 | 2 | Forschung |
| 6 | 3 | Personal |
| ... | ... | ... |

| Tabelle_3: **Kontaktpersonen** | | | |
|---|---|---|---|
| **KontaktpersonId** | **AbteilungNr** | **Nachname** | **Vorname** |
| 1 | 1 | Geing | Josef |
| 2 | 1 | Umdau | Peter |
| 3 | 1 | Graf | Elli |
| 4 | 2 | Pleit | Hannes |
| 5 | 2 | Schön | Gerda |
| 6 | 3 | Toll | Maria |
| 7 | 4 | Stang | Peter |
| ... | ... | ... | ... |

| Tabelle_4: **Kontakte** | | | | |
|---|---|---|---|---|
| **KontaktID** | **KontaktpersonN r** | **Kontaktdatum** | **Gesprächstext** | **geführtvon** |
| 1 | 1 | 01.03.2003 | Rückruf erbeten | |
| 2 | 2 | 02.05.2002 | Unterlagen wichtig | |
| 3 | 3 | 04.07.2004 | Nicht erreicht | |
| 4 | 6 | 12.02.2003 | Meldet sich | |
| 5 | 6 | 24.09.2002 | War sehr interessiert | |
| 6 | 2 | 08.12.2004 | Kommt morgen gegen 14.00 Uhr | |
| 7 | 1 | 16.10.2002 | Momentan kein Budget | |
| 8 | 3 | 17.10.2004 | Hat die Unterlagen verschmissen | |
| 9 | 7 | 19.03.2003 | Nimmt sich immer Zeit wenn notwendig | |
| ... | ... | ... | ... | ... |

| Tabelle_5: **Veranstaltungen** | | | |
|---|---|---|---|
| VeranstaltungId | KontaktpersonNr | VADatum | Personenanzahl |
| 1 | 1 | 01.06.2004 | 3 |
| 2 | 1 | 01.09.2004 | 5 |
| 3 | 2 | 03.07.2004 | 6 |
| 4 | 3 | 09.01.2003 | 81 |
| 5 | 1 | 02.12.2003 | 8 |
| ... | ... | ... | ... |

| Tabellen_6: **VeranstaltungenStati** | | | | |
|---|---|---|---|---|
| StatusId | VeranstaltungNr | Statusdatum | StatusArtNr | Optionsdatum |
| 1 | 1 | 01.01.2004 | 1 | |
| 2 | 1 | 10.01.2004 | 2 | 19.01.2004 |
| 3 | 1 | 13.01.2004 | 3 | |
| 4 | 2 | 06.04.2004 | 2 | 18.04.2004 |
| 5 | 2 | 08.06.2004 | 4 | |
| 6 | 3 | 02.03.2004 | 1 | |
| 7 | 4 | 19.05.2005 | 2 | 23.06.2004 |
| 8 | 4 | 29.06.2004 | 3 | |
| ... | ... | ... | ... | ... |

| Tabelle_7: **ZusatzStatiArten** | |
|---|---|
| StatusArtId | Bezeichnung |
| 1 | Gebucht |
| 2 | Optioniert |
| 3 | Bezahlt |
| 4 | Gemahnt |
| 5 | No Show |
| 6 | Verschoben |
| ... | ... |

| Tabelle_8: **Rechnungen** | | | |
|---|---|---|---|
| RechnungId | VeranstaltungNr | Rechnungsdatum | Rechnungsnummer |
| 1 | 1 | 16.07.2004 | 4 |
| 2 | 2 | 18.09.2004 | 55 |
| 3 | 3 | 12.03.2003 | 6 |
| 4 | 4 | 18.04.2004 | 7 |
| 5 | 5 | 19.11.2003 | 8 |
| 6 | 6 | 21.03.2004 | 9 |
| 7 | 7 | 02.12.2004 | 10 |
| ... | ... | ... | ... |

| Tabelle_9: **Rechnungspositionen** | | | | |
|---|---|---|---|---|
| RechnungspositionId | RechnungNr | PositionNr | Positionsbetrag | |
| 1 | 1 | 1 | € | 100,00 |
| 2 | 1 | 2 | € | 12,00 |
| 3 | 1 | 3 | € | 354,00 |
| 4 | 2 | 1 | € | 6,00 |
| 5 | 2 | 3 | € | 9,00 |
| 6 | 2 | 5 | € | 98,00 |
| 7 | 3 | 6 | € | 7,00 |
| 8 | 3 | 2 | € | 6,00 |
| 9 . | 4 | 1 | € | 54,00 |
| 10 | 4 | 4 | € | 456,00 |
| ... | ... | ... | ... | |

| Tabelle_10: **ZusatzRechnungspositionennamen** | |
|---|---|
| PositionId | Positionsname |
| 1 | Menü |
| 2 | Speisen |
| 3 | Getränke |
| 4 | Musik |
| 5 | Dekoration |
| 6 | Saalmiete |
| ... | ... |

Für jede Datenstruktur ist eine Tabelle der Relationen vorhanden, in der alle der abgefragten Datenbank zugeordneten Datenstruktur entsprechenden Relationen sowie gegebenenfalls frei generierte Relationen enthalten sind.

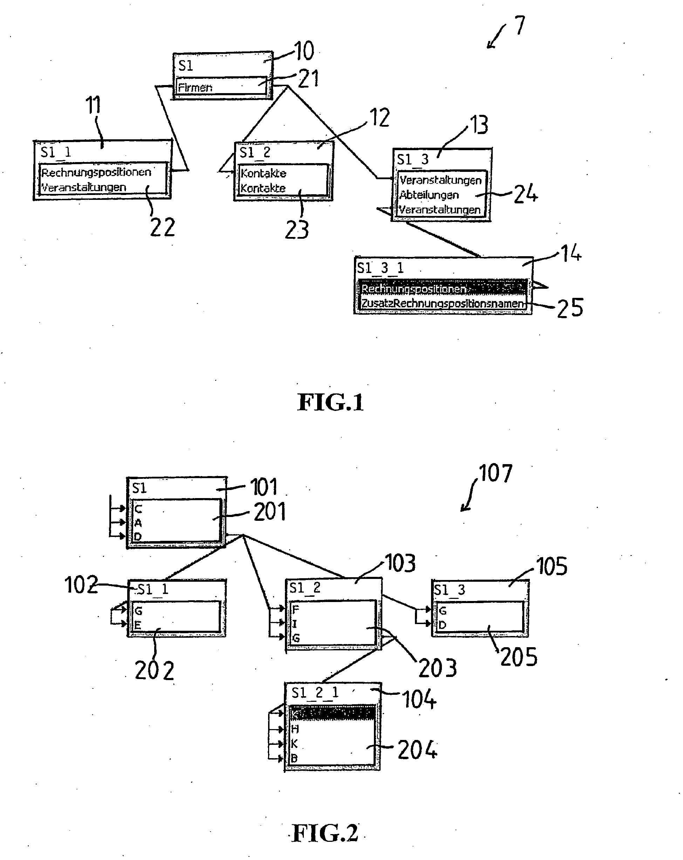

**Tabelle 11: Tabelle der Relationen zu Fig.1**

| **Von Tabelle** | **Von Spalte** | **Nach Tabelle** | **Nach Spalte** | **Relationstyp** |
|---|---|---|---|---|
| Firmen | FirmaID | Abteilungen | FirmaNr . | 1:n |
| Abteilungen | AbteilungID | Kontaktspersonen | AbteilungNr | 1:n |
| Kontaktpersonen | KontaktpersonID | Kontakte | KontaktpersonNr | 1:n |
| Kontaktpersonen | KontaktpersonID | Veranstaltungen | KontaktpersonNr | 1:n |
| Veranstaltungen | VeranstaltungID | Veranstaltungenstati | VeranstaltungNr | 1:n |
| Zusatzstatiarten | StatusartID | Veranstaltungenstati | StatusartNr | 1:n |
| Veranstaltungen | VeranstaltungID | Rechnungen | VeranstaltungNr | 1:n |
| Rechnungen | RechnungID | Rechnungspositionen | RechnungNr | 1:n |
| Zusatzrechnungspositionennamen | PositionID | Rechnungspositionen | PositionNr | 1:n |

In der vorgenannten Datenstruktur der Datentabellen 1 bis 10 (Tabelle 1 bis 10) läßt sich z.B. die folgende Aufgabe formulieren, aus der ersichtlich ist, welch komplexe Fragestellungen mit dem erfindungsgemäßen Verfahren bewältigt werden können. Im nachfolgenden Beispiel wird auf diese Datenstruktur Bezug genommen.

### Beispiel 2:

*Alle Firmen und deren diesjähriger Veranstaltungsgesamtumsatz anzeigen, aber nur für jene, mit denen heuer zumindest zehn Kontakte geführt wurden und in Marketingabteilungen heuer zumindest drei Veranstaltungen mit über 50 EURO an Umsatz für Speisen und Getränke gebucht wurden.*

Beim erfindungsgemäßen Verfahren werden im wesentlichen die folgenden Schritte ausgeführt.
1) Angeben einer abarbeitbaren Datenbankanweisung ohne relationenbezogene Operationen
2) Ermitteln eines Zugriffspfades

Dies erfolgt im einzelnen wie folgt:
**ad 1**) Verarbeitungsfunktionen und Datentabellen und deren Spalten angeben, auf die die Verarbeitungsfunktionen angewandt werden sollen und die Reihenfolge sowie die Hierarchiestufe, mit der die Abarbeitung zu erfolgen hat.
SELECT .....Verarbeitungsfunktion
   Firmen ..... Datentabelle, auf die Verarbeitungsfunktion angewandt werden soll Alle Spalten (.*)...Spalten, auf die Verarbeitungsfunktion angewandt werden soll
Alle Spalten der Tabelle "Firmen" angeben
   Für jede selektierte Firma die Summe aller Positionsbeträge aus der zugehörigen Spalte der Tabelle "Rechnungspositionen" bestimmen unter der Einschränkung des Veranstaltungsjahres (heuer).

Erfindungsgemäßes Erstellen der Datenbankanweisung führt daher zu:

```
 SELECT Firmen.*,
      (SELECT SUM (Rechnungspositionen.Positionsbetrag)
       WHERE (Veranstaltungen.VADatum=date.year))
 WHERE (SELECT COUNT(Kontakte.*)
            WHERE (Kontakte.Kontaktdatum=date.year)
 )> = 10
 AND (SELECT COUNT(Veranstaltungen.*)
            WHERE (Abteilungen.Abteilungsname= "Marketing")
           AND (SELECT SUM (Rechnungspositionen.Positionsbetrag)
                 WHERE (Zusatzrechnungspositionennamen.Positionsname

                  IN ("Speisen", "Getränke"))
            ) >50
           AND(Veranstaltungen.VADatum = date.year)
 ) >=3
```

### ["Date.year" ersetzt dabei BETWEEN 01.01.aktuelles Jahr AND 31.12.aktuelles Jahr]

In dieser Anfrage sind nur die Tabellen ohne Relationen enthalten, auf welche Verarbeitungsfunktionen angewandt werden sollen. Damit liegt Unabhängigkeit von jedweder Datenstruktur vor und es ergibt sich zugleich eine Verkürzung der Schreibweise und somit eine Erhöhung der Übersichtlichkeit. So fallen z.B. sonst übliche kartesische Produktbildungen, welche durch Relationen eingeschränkt sind, weg, weil im Statement alle Informationen vorhanden sind, die in Kombination mit der Tabelle der Relationen für die Ermittlung eines Zugriffspfades der jeweiligen Datenstruktur verwertet werden können, sodaß zum einen Unabhängigkeit von der konkreten Datenstruktur gegeben ist und zum anderen die Eingabe der Anfrage für den Anwender verkürzt und sich nur auf das Wesentliche beschränkt, was wiederum die Übersichtlichkeit erhöht.

**ad 2**) Aufgrund der Fragestellung ergibt sich in der Anfrage (Statement) bedingt durch die auszuführenden Unterabfragen (SUBSELECT) eine natürliche Reihenfolge der verwendeten Datentabellen sowie Hierarchiestufen, aus denen unter Zuhilfenahme der Tabelle der Relationen (Tabelle 11) Teilzugriffspfade für die Generierung eines SQL-Statements für die jeweilige Datenstruktur ermittelt werden.

Die oben genannten Reihenfolge und die Hierarchiestufen der verwendeten Datentabellen werden vorzugsweise in Form eines *geordneten Baumes* 7 (Fig.1) dargestellt, der eine Wurzel 10 und Knoten 11, 12, 13 und 14 enthält, wobei der Knoten 14 ein Unterknoten zum Knoten 13 ist.

Die Wurzel 10 des geordneten Baumes 7 enthält als Informationsfeld 21 alle Namen der Datentabellen nur der übergeordneten Anfrage z.B. in Form einer Liste oder eines Arrays, und zwar praktischerweise in der im Statement angegebenen Reihenfolge, optional ohne doppelte Datentabellen-Namen. Für die Wurzel 10 beinhaltet das Informationsfeld 21 die Datentabelle FIRMEN (Tabelle 1). Der Wurzel 10 untergeordnet sind Unterabfragen (SUBSELECT) und deren untergeordnete Unterabfragen (SUBSELECT im SUBSELECT), die als Knoten 11, 12, 13, 14 in die Baumstruktur eingetragen sind. Die Informationsfelder 22, 23, 24, 25 der Knoten 11, 12, 13, 14 enthalten die den Unterabfragen zugeordneten Namen der Datentabellen, die im jeweiligen SUBSELECT angegeben wurden, ebenfalls z.B. in Form einer Liste oder eines Arrays. Für den Knoten 13 sind dies die Datentabellen VERANSTALTUNGEN (Tabelle 5), ABTEILUNGEN (Tabelle 2) und VERANSTALTUNGEN (Tabelle 5) im Informationsfeld 24. Das SUBSELECT des Knotens 13 enthält gemäß der Fragestellung ein weiteres SUBSELECT durch den Knoten 14, der seinerseits in seinem Informationsfeld die Datentabellen RECHNUNGSPOSITIONEN (Tabelle 9) und ZUSATZRECHNUNGSPOSITIONENNAMEN (Tabelle 10) beinhaltet.

Dieser Baum 7 wird in einem Preorder-Durchlauf durchlaufen: Knoten 10, Knoten 11, Knoten 12, Knoten 13 und Knoten 14.

Als Hierarchiestufen lassen sich die nachfolgend angegebenen darstellen.
Stufe 1 *Firmen*
   Wurzel 10, Übergeordnete Abfrage
Stufe 1.1 *Rechnungspositionen, Veranstaltungen*
   Knoten 11, Unteranfrage im SELECT-Teil der Hauptanfrage
Stufe 1.2 *Kontakte, Kontakte*
   Knoten 12, Unteranfrage im WHERE-Teil der Hauptanfrage
Stufe 1.3 *Veranstaltungen, Abteilungen, Veranstaltungen*
   Knoten 13, Unteranfrage AND-Teil der Hauptanfrage
Stufe 1.3.1 *Rechnungspositionen, ZusatzRechnungspositionsnamen*
   Knoten 14, Unteranfrage in der Unteranfrage AND

Nunmehr erfolgt die Zugriffspfadermittlung, die eine Zugriffsreihenfolge auf die Datenbank konkret vorgibt, indem über die Tabelle der Relationen zwischen jeweils zwei aufeinanderfolgenden, ausgewählten Datentabellen ein Teilzugriffspfad auf Basis der zwischen den aufeinanderfolgenden Datentabellen vorhandenen Relationen berechnet wird, und aus allen errechneten Teilzugriffspfaden der Zugriffspfad zusammengesetzt wird.

Dabei zu berücksichtigen ist, daß durch den Wegfall jeglicher Produktbeschreibungen im Statement (FROM-Teil) die angegebene Datentabellen-Reihenfolge mit Verarbeitungsfunktionen ein doppeltes oder mehrfaches Durchlaufen von Teilzugriffspfaden ergeben kann, woraus bei der kartesischen Produktbildung gleiche Datentabellen fälschlicherweise mehrfach einbezogen würden, was ein falsches Anfrageergebnis zur Folge hätte.

Anhand des mit der oben angegebenen Tabelle der Relationen (Tabelle 11) ermittelten Zugriffspfades können nun relationenorientierte Operationen in die erfindungsgemäß (Beispiel 2) angegebene Datenbankanweisung eingesetzt werden, wodurch folgendes SQL-Statement herauskommt, (die eingesetzten Operationen sind kursiv gesetzt) welches von jedem den SQL-Standard unterstützenden Datenbanksystem verarbeitet werden kann. Eine mögliche Form der Berechnung wird anschließend erläutert.

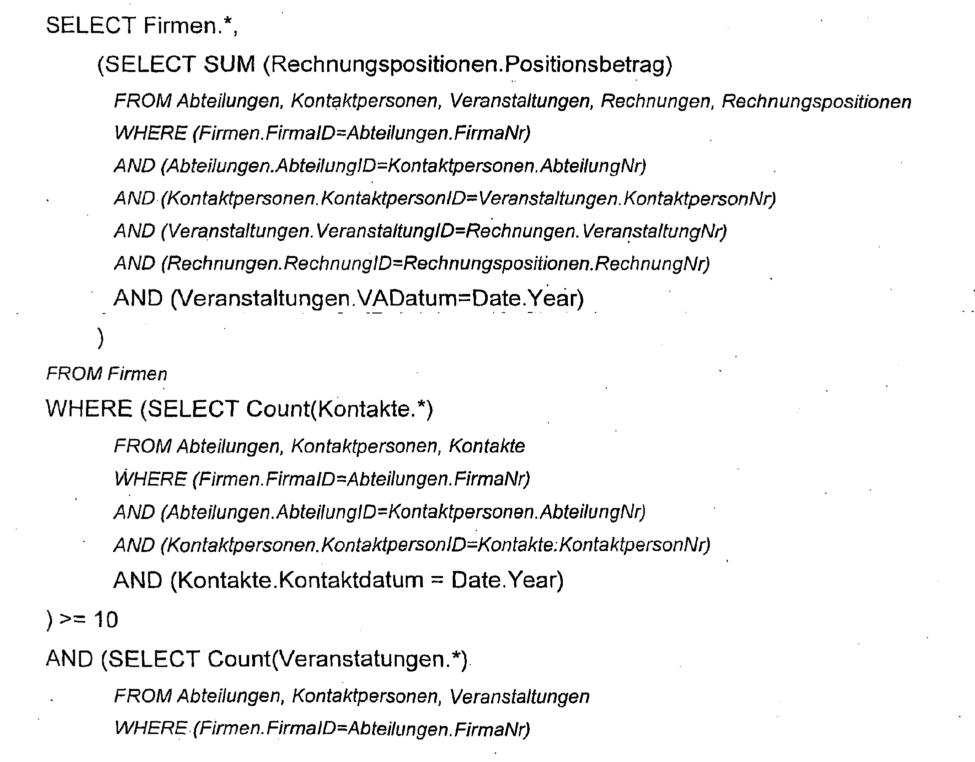

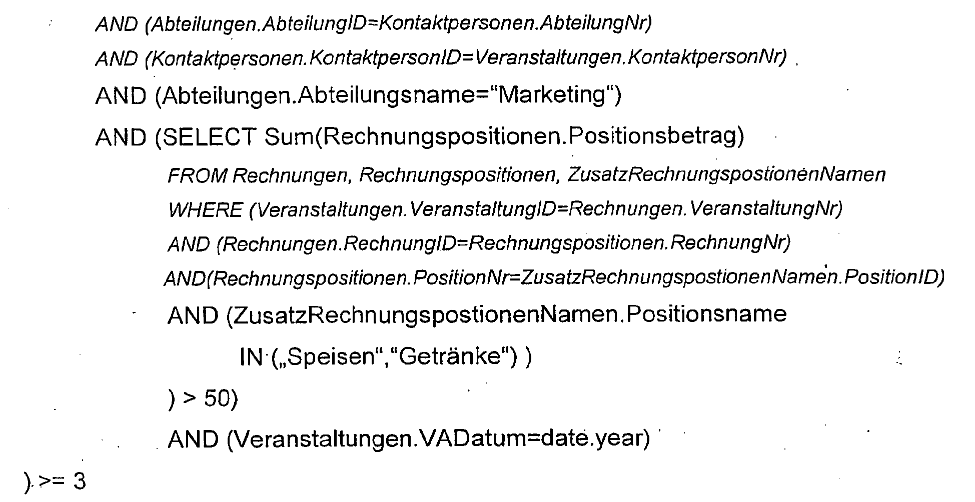

Aus der Länge des auf diese Weise gewonnenen Statements im Vergleich zu dem in Schritt 1) erstellten ist klar zu ersehen, welche Vorteile hinsichtlich Kürze und Übersichtlichkeit aber insbesondere Unabhängigkeit von der Datenstruktur erzielt werden können.

Wird das Statement als Anfrage gespeichert, so kann die erfindungsgemäße Schreibweise und die generierte Schreibweise übernommen werden und eine Neuberechnung fällt weg. Eine solche wird nur bei Änderungen der Datenstruktur oder an derselben bzw. am Statement selbst durchgeführt. Dadurch fällt die sehr geringe Zeitspanne für die Umwandlung in ein SQL-Statement weg. Weitere Optimierungen liegen im Bereich des Fachwissens.

Eine andere Möglichkeit wäre, daß der ermittelte Zugriffspfad in der Datenbankanweisung separiert angegeben wird, der schrittweise auf die Datentabellen verweist, und zum Zugriff auf die Datenbank diesen Verweisen auf die Datentabellen schrittweise gefolgt wird. So ergibt sich z.B.

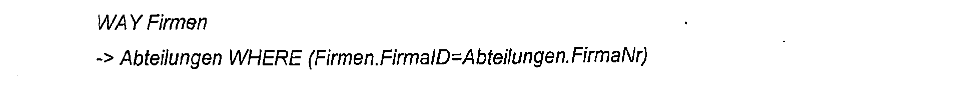

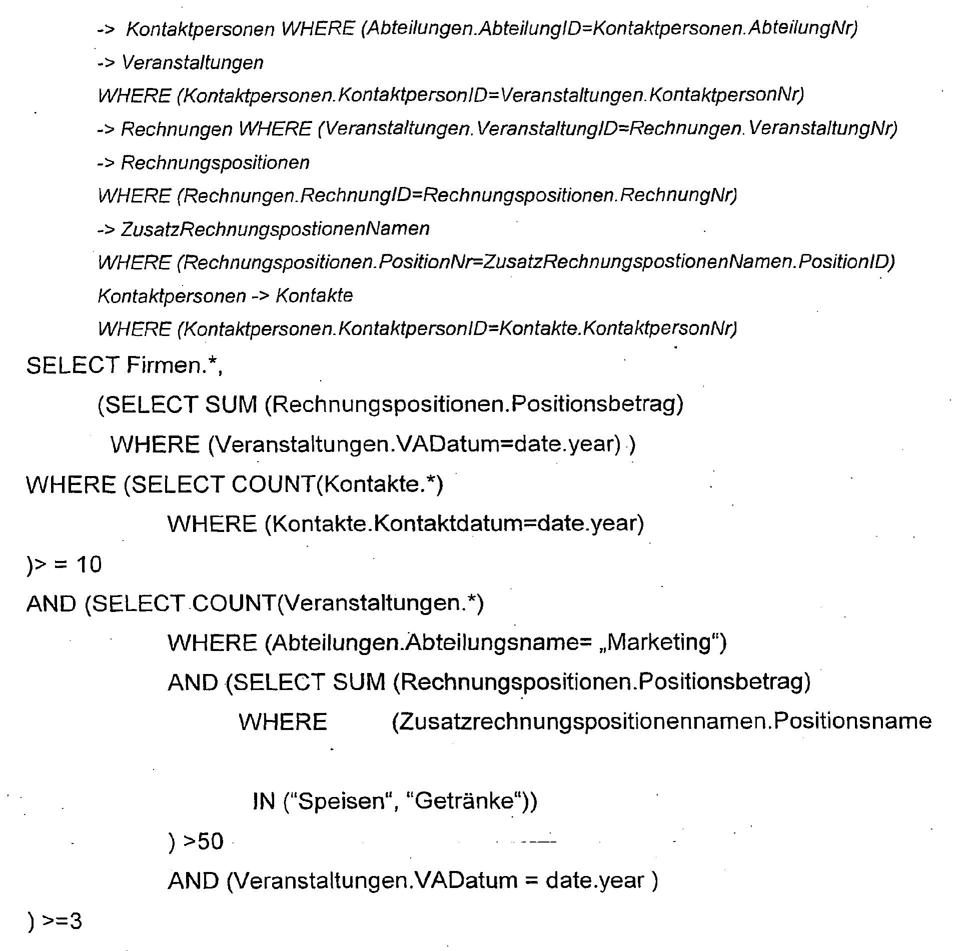

Dadurch fällt die Eingliederung in das Statement weg, der Zugriffspfad verweist schrittweise auf die Datentabellen. Diesen Verweisen wird zum Zugriff auf die Datenbank schrittweise gefolgt.

Ein möglicher Algorithmus zur Ermittlung des Zugriffspfades unter Zuhilfenahme des geordneten Baumes, wie er in Fig.1 angegeben ist, wird - um das Verständnis zu erleichtern und nicht voh Tabellennamen usw. abzulenken - nachfolgend anhand einer einfachen Datenstruktur gezeigt. Dabei ist hervorzuheben, daß dieser angegebene Algorithmus nur einer von vielen ist, die für die Berechnung angewandt werden können.

Generell werden bei der Ermittlung des Gesamtzugriffspfades doppelt angegebene Teilpfade gestrichen.
Z.B. Datentabellen A, B, C, D, E, F, G, H
Informationsfeld einer Wurzel des geordneten Baumes beinhaltet z.B. : A, C, F, B. Als Teilpfade ergeben sich somit
Teilpfad AC: A B C
Teilpfad CF: C D E F
Teilpfad FB: F E D C B
Unbereinigter Gesamtpfad daher: A B C D E F E D C B
Wie ersichtlich ist E D C B doppelt angegeben und daher zu streichen
Richtiger Gesamtpfad somit: A B C D E F

Unter der Annahme einer konkret vorliegenden Baumdarstellung, wie sie in Fig.2 gezeigt ist, wird nunmehr eine von vielen Möglichkeiten angegeben, wie die Zugriffspfadberechnung gemäß erfindungsgemäßem Verfahren und Übersetzung in ein SQL-Statement durch Anwendung folgender Schritte durchgeführt werden kann.

Es liegen Datentabellen A, B, C, D, E, ........ in einer Datenstruktur vor.

Aus der der Darstellung in Fig.2 zugrunde liegenden Anfrage, die der besseren Übersichtlichkeit wegen nicht angegeben ist, ergibt sich folgende Baumstruktur.

Wurzel (Knoten) 101 mit Informationsfeld 201,welches C,A,D enthält
Knoten 102 mit Informationsfeld 202,welches G,E enthält
Knoten 103 mit Informationsfeld 203,welches F,I,G enthält
Knoten 104 mit Informationsfeld 204,welches K,H,K,B enthält
Knoten 105 mit Informationsfeld 205,welches G,D enthält

Die der gewählten Datenstruktur zugehörige Tabelle der Relationen verbindet dabei zur einfacheren Darstellung vereinfacht jeweils alphabetisch aufeinanderfolgende Datentabellen durch jeweils ein gemeinsames Relationenfeld, somit A<->B, B <-> C, C<->D,..... Folgende Relationenfelder werden, wie aus Tabelle 12 (Tabelle der Relationen) hervorgeht, angenommen.

**Tabelle 12: Tabelle der Relationen zu Fig.2**

| | |
|---|---|
| Tabelle A | Spalten a, z1 |
| Tabelle B | Spalten b, a1 |
| Tabelle C | Spalten c, b1 |
| Tabelle D | Spalten d, c1 |
| ..... | |

| Von Tabelle | Von Spalte | Nach Tabelle | Nach Spalte | Relationstyp |
|---|---|---|---|---|
| A | a | B | a1 | 1: n |
| B | b | C | b1 | 1:n |
| C | c | D | c1 | 1:n |
| D | d | E | d1 | 1:n |
| ..... | ..... | ..... | ..... | 1:n |
| ..... | | | | |
| ..... | | | | |
| | | | | |
| | | | | |

Der für eine bestimmte Anfrage erstellte geordnete Baum wird in einer sogenannten Preorder-Reihenfolge durchlaufen, indem ausgehend von einem ersten Knoten, der Wurzel 101 des geordneten Baumes 107 sämtliche weitere Knoten 102, 103, 104, 105 entsprechend der Hierarchiestufen durchlaufen werden.

| | |
|---|---|
| Stufe 1 | *C, A, D* |
| Wurzel (Knoten) 101 | |
| | |
| Stufe 1.1 | *E,G* |
| Knoten 102 | |
| | |
| Stufe 1.2 | *F,I,G* |
| Knoten 103 | |
| | |
| Stufe 1.2.1 | *K,H,K,B* |
| Knoten 104 | |
| | |
| Stufe 1.3 | *G,D* |
| Knoten 105 | |

Wie erwähnt, ist in Fig.2 eine Baumdarstellung einer nicht näher angegebenen Anfrage abgebildet. Die Wurzel 101 (oberster Knoten) enthält im Informationsfeld 201 eine Liste oder einen Array od.dgl. aller in der Hierarchiestufe 1 der übergeordneten Anfrage enthaltenen Datentabellen-Namen, wobei in der nicht angegebenen Anfrage - wie oben beschrieben - nur die Datentabellen genannt wurden, auf die Verarbeitungsfunktionen angewandt werden. Die Reihenfolge der angegebenen Datentabellen ist dabei C, A, D.

In der darauffolgenden Hierarchiestufe 1.1 ist für jede Unteranfrage der übergeordneten Anfrage jeweils ein Knoten 102, 103, 105 angelegt worden, der als Informationsfeld 202, 203, 205 die in dieser Unteranfrage verwendeten Datentabellen-Namen als Liste, Array od. dgl. beinhaltet. Die Reihenfolge ist für 102 z.B. G,E, für 103 z.B. F,1,G u.s.w.

Die Hierarchiestufe 1.2.1 stellt die Unteranfrage zur Unteranfrage 1.2 (Knoten 103) dar, die wiederum als Informationsfeld 204 die dafür verwendeten Datentabellen-Namen K, H, K, B enthält.

Innerhalb eines Knotens, wobei in der Wurzel 101 begonnen wird, ist jeweils die Liste der Datentabellen z.B. im Informationsfeld 201 die Datentabellen C, A, D zu durchlaufen und es werden für jeweils zwei in der Liste aufeinanderfolgende Datentabellen die Teilzugriffspfade berechnet, wobei, wie bereits vorstehend beschrieben, mehrfache Durchläufe eliminiert werden, um unnötige Produktbildungen, welche ein falsches Produkt zur Folge haben, zu vermeiden.

Dabei ist zu beachten: Ein Knoten, der direkt unter einem anderen Knoten liegt, heißt (direkter) Nachfolger dieses Knotens. Umgekehrt heißt dieser andere Knoten direkter Vorgänger.

Wurde die Liste des Informationsfeldes eines Knotens komplett durchlaufen, wird der in der Preorder-Reihenfolge nächste Knoten gesucht. Zwischen der ersten Datentabelle der Liste des Informationsfeldes dieses nächsten Knotens und der letzten Datentabelle der Liste des Informationsfeldes seines direkten Vorgängers wird der Teilzugriffspfad ermittelt, danach wird die Liste dieses nächsten Knotens bis zur letzten Datentabelle, wie vorstehend beschrieben durchlaufen. Z.B.

### Knoten 104:

Durchlauf der Liste der Datentabellen im Informationsfeld 204:
K, H, K, B

Preorder-mäßig nächster Knoten ist der Knoten 105, dessen direkter Vorgänger aber ist Knoten 101, daher wird die Verbindung zwischen G (Knoten 105) und D (Knoten 101) gesucht und der Teilzugriffspfad errechnet. Danach erfolgt der Durchlauf der Datentabellen G, D im Informationsfeld 205 im Knoten 105 des Baumes 107.

Nach oder während des Durchlaufs eines jeden Knotens werden wie bereits erwähnt doppelte Teilzugriffspfade entfernt, dabei werden alle doppelten oder mehrfachen Datentabellen-Namen und Relationsangaben für den jeweiligen Knoten oder einer seiner Vorgänger bis einschließlich Wurzel verworfen.

Für die Berechnung jedes einzelnen Teilzugriffspfades wird z.B. wie folgt vorgegangen.

Zunächst wird die Tabelle der Relationen (Tabelle 12) in z.B. einen Graphen eingelesen, wobei die Kanten des Graphen jeweils auch die Relationen-Bedingungen enthalten, um unter Zuhilfenahme der Graphentheorie Verbindungen zwischen jeweils zwei Datentabellen über die Relationen zu ermitteln.

Für Stufe 1 ergibt sich daher im ersten Schritt C -> A als Pfad zwischen C und A als Ergebnis der z.B. kürzesten Weg-Berechnung folgende Liste:

| Tabellen | | Relationen-Bedingungen | |
|---|---|---|---|
| C | B | b1 | b |
| B | A | a1 | a |

Darauffolgend A -> D ist der Pfad A, B, C, D

| Tabellen | | Relationen-Bedingungen | |
|---|---|---|---|
| A | B | a | a1 |
| B | C | b | b1 |
| C | D | c | c1 |

Damit ist die Liste des Informationsfeldes 201 des ersten Knoten 101 durchlaufen, jetzt erfolgt die Bereinigung wertgleicher Zeilen, das Ergebnis wird in einen String umgewandelt und in das SQL-Statement an richtiger Stelle eingefügt. (NACH DEM SELECT und VOR DEM WHERE)

Für Stufe 1 ergibt sich folgender String:
FROM A, B, C, D
WHERE (A.a = B.a1) AND (B.b = C.b1) AND (C.c = D.c1)

Damit ist man an das Ende der Liste des aktuellen Knotens, hier die Wurzel, angelangt. Als nächster Schritt wird festgestellt, ob es Vorgängerknoten gibt. Im Fall der Wurzel trifft dies definitionsgemäß nicht zu.

### Zusammenfassend werden daher folgende Schritte ausgeführt:

| |
|---|
| **Informationsfeld 201 von Knoten 101** |
| **C -> A** |
| **A -> D** |
| **Ergibt: FROM A, B, C, D** |
| **WHERE (A.a = B.a1) AND (B.b = C.b1) AND (C.c = D.c1)** |
| **Nächster Knoten: 102, Vorgänger-Knoten 101** |
| erstes Datentabelle aktueller Knoten und letzte Datentabelle Vorgänger-Knoten |
| **D -> G** |
| Durchlaufen der Liste |
| **G -> E** |
| **Ergibt: FROM E, F, G** |
| **WHERE (D.d = E.d1) AND (E.e = F.e1) AND (F.f = G.f1)** |
| **Nächster Knoten: 103, Vorgänger-Knoten 101** |
| erstes Datentabelle aktueller Knoten und letzte Datentabelle Vorgänger-Knoten |
| **D -> F** |
| Durchlaufen der Liste |
| **F -> I** |
| **I -> G** |
| **Ergibt: FROM E, F, G, H, I** |
| **WHERE (D.d=E.d1) AND (E.e=F.e1) AND (F.f=G.f1) AND (G.g=H.g1) AND** |
| **(H.h=I.h1)** |
| **Nächster Knoten: 104, Vorgänger-Knoten 103** |
| erstes Datentabelle aktueller Knoten und letzte Datentabelle Vorgänger-Knoten |
| **G-> K** |
| Durchlaufen der Liste |
| **K -> H** |
| **H -> K** |
| **K -> B** |
| **Ergibt: FROM J, K** |
| **WHERE (I.i = J.i1) AND (J.j = K.j1)** |
| **Nächster Knoten: 105, Vorgänger-Knoten 101** |
| erstes Datentabelle aktueller Knoten und letzte Datentabelle Vorgänger-Knoten |
| **D -> G** |
| Durchlaufen der Liste |
| **G -> D** |
| **Ergibt: FROM E, F, G** |
| **WHERE (D.d = E.d1) AND (E.e = F.e1) AND (F.f = G.f1)** |

Eine Anwendung des erfindungsgemäßen Verfahrens kann darin bestehen, daß zu einer bestehenden Datenstruktur verschiedene Statements existieren, die für eine andere Datenstruktur nicht anwendbar sind, da andere Relationen zwischen den Datentabellen bestehen. In der Praxis tritt dieses Problem häufig beispielsweise bei Firmenfusionen oder bei Datenkonvertierung im Zusammenhang eines Wechsels von einem Programmhersteller zum anderen oder bei Datenstrukturänderungen, die aufgrund von Geschwindigkeitsverlusten vorgenommen werden, auf.

Da die Erfindung es ermöglicht, eine Datenbankanweisung ohne Datenstrukturbezug zu erstellen, kann folgendermaßen vorgegangen werden.

In einer Datenbankanweisung werden für eine erste Datenbank mit einer ersten zugeordneten Datenstruktur die zugehörigen ersten relationenorientieren Operationen entfernt.

In die von den ersten relationenorientierten Operationen befreite Datenbankanweisung werden zweite relationenoriente Operationen eingefügt, welche einer zweiten Datenstruktur, die einer zweiten Datenbank zugeordnet sind, entsprechen,

Nun kann die Abfrage auf Basis der mit den zweiten relationenorientierten Operationen versehenen Datenbankanweisung durchgeführt werden, indem unter Verwendung der zugehörigen Tabelle der zweiten Relationen die Teilzugriffspfade ermittelt und zu einem Zugriffspfad zusammengesetzt werden.

```
 SELECT A.*
 FROM A
 WHERE ( (SELECT Count(C.*)
             FROM B, C
             WHERE (A.a = B.a1)
             AND (B.b = C.b1)
             AND (C.Feld1 = 100)
 ) > 20)
 AND (A.Feld1 = 40)
 Entfernt wird: FROM A
 Entfernt wird: FROM B, C
      Und daher alle Relationen A - B und B - C und A - C, die in der Tabelle der
      Relationen gefunden werden
      also A.a = B.b1 und B.b = C.b1
```

Bleibt als erfindungsgemäßes Statement:

```
 SELECT A.*
 WHERE ( (SELECT Count(C.*)
             WHERE(C.Feld1 =100)
 )>20)
 AND (A.Feld1 = 40)
```

Auf dieses Statement kann das erfindungsgemäße Verfahren mit einer neuen Tabelle der Relationen angewandt werden.

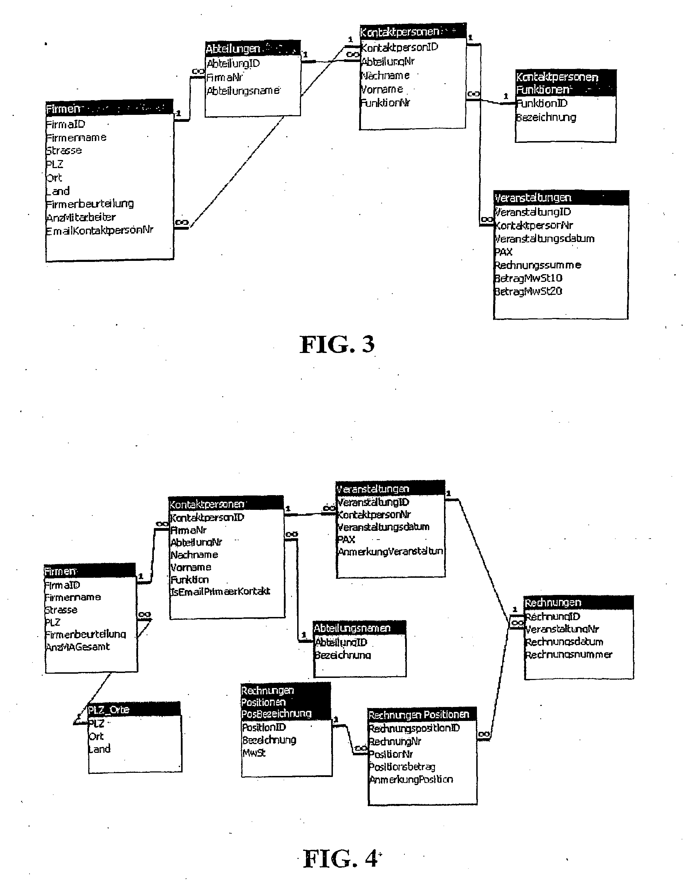

Um den Einfluß der Datenstruktur auf die Datenbankanweisung zu veranschaulichen, sind in Fig.3 und in Fig.4 nochmals schematisch zwei unterschiedliche Tabellen der Relationen graphisch für eine Datenstruktur 3 und für eine Datenstruktur 4 gezeigt, für welche dieselbe Anfrage ausgeführt werden soll.

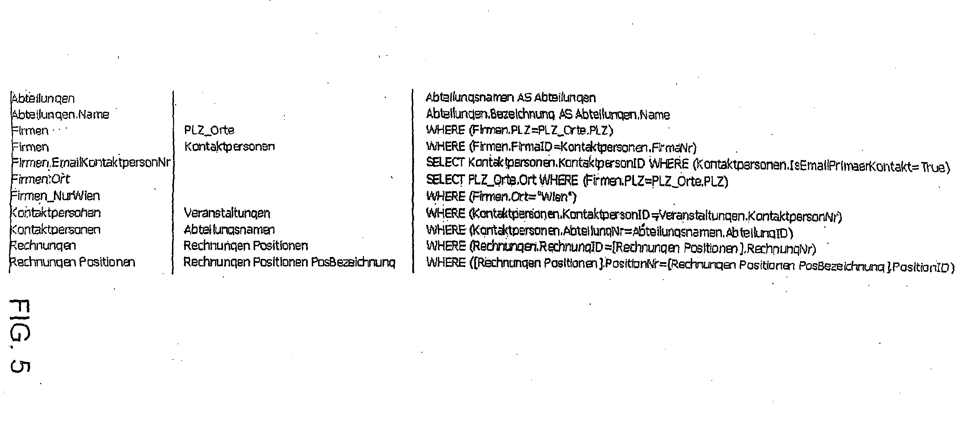

In Fig.5 ist dazu die Tabelle der Relationen für die Datenstruktur 4 gemäß Fig.4 in einer erweiterten Form angegeben. Zusätzlich zu den üblichen Relationen zwischen Datentabellen sind in der rechten Spalte frei vergebbare Namen oder Makrocodes angegeben, welche anstelle der in der linken Spalte angegebenen Datentabellen bei Aufruf gesetzt bzw. durchgeführt werden. Im Zusammenhang mit dem Erfindungsprinzip wird dadurch eine noch größere Unabhängigkeit von der Datenstruktur erreicht, da Tabellennamen und Tabellenfelder berechnet werden können oder mit anderen Namen versehen werden können.

Erweiterte Tabelle der Relationen für Datenstruktur 4 in Fig.5:

Hier werden Alias-Tabellen-Namen und Alias-Feldnamen bekannt gegeben und auch Informationen, die die Aufteilung von Tabellen betreffen, z.B. Firmen.Ort

### Beispiel 3:

### Alle Firmen mit mind. 3 Kontaktpersonen in der Marketing-Abteilung

Erfindungsgemäß werden zunächst für eine beispielhafte Anwendung die gemäß der Anfrage benötigten Datentabellen und Verarbeitungsfunktionen angegeben

```
 SELECT Firmen.*
 WHERE (
      (SELECT Count(Kontaktpersonen.*)
      WHERE(Abteilungen.Name = "Marketing"))
 >= 3)
```

Für die Datenstruktur 3 und die Datenstruktur 4 ergeben sich bei Ausführung des erfindungsgemäßen Verfahrens entsprechend unterschiedliche SQL-Statements

### Mit Datenstruktur 3:

```
 SELECT Firmen.*
 FROM Firmen
 WHERE (
      (SELECT Count(*)
      FROM Abteilungen, Kontaktpersonen
      WHERE (Firmen.FirmaID=Abteilungen.FirmaNr)
        AND (Abteilungen.AbteilungID=Kontaktpersonen.AbteilungNr)
        AND (Abteilungen.Name="Marketing")
      )
 >= 3)
```

### Mit Datenstruktur 4:

```
 SELECT Firmen.*
 FROM Firmen
 WHERE (
       (SELECT Count(*)
       FROM Kontaktpersonen, Abteilungsnamen
      WHERE (Firmen.FirmaID=Kontaktpersonen.FirmaNr)
        AND (Kontaktpersonen.AbteilungNr=Abteilungsnamen.AbteilungID)
        AND (Abteilungsnamen.Bezeichnung="Marketing")
       )
 >= 3)
```

## Patentansprüche

1. Verfahren zur Steuerung eines relationalen Datenbanksystems durch Ausführung einer Datenbankanfrage in einer relationalen Datenbank, welche als zugeordnete Datenstruktur eine Vielzahl durch Relationen miteinander verbundene Datentabellen enthält, unter Verwendung einer Datenbanksprache, wobei eine Tabelle der Relationen vorhanden ist, und wobei eine abarbeitbare Datenbankanweisung erstellt wird, welche keine relationenbezogenen Operationen enthält und ein Zugriffspfad ermittelt wird, der eine Zugriffsreihenfolge auf die Datenbank konkret vorgibt,
**dadurch gekennzeichnet,**
- **daß** die erstellte Datenbankanweisung nur Verarbeitungsfunktionen, Datentabellen und deren Spalten, auf welche die Verarbeitungsfunktionen angewandet werden sollen, und die Reihenfolge sowie die Hierarchiestufe, mit der die Abarbeitung zu erfolgen hat, enthält,
wobei die Reihenfolge und die Hierarchiestufen der verwendeten Datentabellen in Form eines geordneten Baumes dargestellt werden, und die Wurzel des geordneten Baumes alle Namen der Datentabellen nur der übergeordneten Anfrage enthält, und
der Wurzel untergeordnet Unteranfragen als Knoten in die Baumstruktur eingetragen sind, die den Unterabfragen zugeordnete Namen der Datentabellen enthalten,
- **daß** in der Tabelle der Relationen in an sich bekannter Weise die Relationen als Verbindungen zwischen jeweils zwei Datentabellen über jeweils zumindest ein Schlüsselfeld angegeben sind,
- **daß**, basierend auf besagtem Baum, der Zugriffspfad ermittelt wird, indem zunächst über die Tabelle der Relationen zwischen jeweils zwei aufeinander folgenden, ausgewählten Datentabellen Zumindest ein Teilzugriffspfad auf Basis der zwischen den aufeinander folgenden Datentabellen vorhandenen Relationen berechnet wird, und dann aus allen errechneten Teilzugriffspfaden der Zugriffspfad zusammengesetzt wird,
- **daß** anhand des mit der Tabelle der Relationen ermittelten Zugriffspfades relationenorientierte Operationen in die angegebene Datenbankanweisung eingesetzt werden, wodurch sich ein SQL-Statement ergibt, welches von jedem den SQL-Standard unterstützenden Datenbanksystem verarbeitet werden kann.

2. Verfahren nach Anspruch 1, **dadurch gekennzeichnet, daß** in der Tabelle der Relationen alle der abgefragten Datenbank zugeordneten Datenstruktur entsprechenden Relationen sowie gegebenenfalls frei generierte Relationen enthalten sind.

3. Verfahren nach Anspruch 1 oder 2, **dadurch gekennzeichnet, daß** zur Ermittlung der Teilzugriffspfade die Tabelle der Relationen in einen auf der Graphentheorie basierenden Graphen eingelesen und unter Zuhilfenahme des gebildeten Graphen die Teilzugriffspfade berechnet werden.

4. Verfahren nach Anspruch 1, 2 oder 3, **dadurch gekennzeichnet, daß** anhand des Zugriffspfades relationenorientierte Operationen in die Datenbankanweisung eingesetzt werden.

5. Verfahren nach Anspruch 1, 2 oder 3, **dadurch gekennzeichnet, daß** der ermittelte Zugriffspfad in der Datenbankanweisung separiert angegeben wird, der schrittweise auf die Datentabellen verweist, und zum Zugriff auf die Datenbank diesen Verweisen auf die Datentabellen schrittweise gefolgt wird.

6. Verfahren nach einem der Ansprüche 1 bis 5, **dadurch gekennzeichnet,**
- **daß** in einer Datenbankanweisung für eine erste Datenbank mit einer ersten zugeordneten Datenstruktur die zugehörigen ersten relationenorientierten Operationen entfernt werden,
- **daß** in die von den ersten Relationen befreite Datenbankanweisung zweite relationenorientierte Operationen eingefügt werden, welche zweite relationenorientierte Operationen einer zweiten Datenstruktur, die einer zweiten Datenbank zugeordnet sind, entsprechen,
- **daß** die Durchführung der Abfrage auf Basis der mit den zweiten relationenorientierten Operationen versehenen Datenbankanweisung durchgeführt wird, indem unter Verwendung der zugehörigen Tabelle der zweiten Relationen die Teilzugriffspfade ermittelt und zu einem Zugriffspfad zusammengesetzt werden.

7. Relationales Datenbanksystem, welches ein Computersystem mit einer relationalen Datenbank, eine Datenverarbeitungseinheit und einen Speicher umfaßt, wobei die Datenverarbeitungseinheit nach dem Verfahren nach einem der Ansprüche 1 bis 6 arbeitet.

8. Datenträger mit einer mit in einer Datenbanksprache angegebenen Datenbankanweisung zur Steuerung und zum Einlesen in ein relationales Datenbanksystem nach Anspruch 7, **dadurch gekennzeichnet, daß** die auf dem Datenträger vorliegende Datenbankanweisung ohne relationenbezogene Operationen erstellt ist, indem nur Verarbeitungsfunktionen, Datentabellen und deren Spalten, auf welche die Verarbeitungsfunktionen angewandet werden sollen, und die Reihenfolge sowie die Hierarchiestufe, mit der die Abarbeitung zu erfolgen hat, angegeben sind, wobei die Reihenfolge und die Hierarchiestufen der verwendeten Datentabellen in Form eines geordneten Baumes dargestellt werden, und die Wurzel des geordneten Baumes alle Namen der Datentabellen nur der übergeordneten Anfrage enthält, und der Wurzel untergeordnet Unteranfragen als Knoten in die Baumstruktur eingetragen sind, die den Unterabfragen zugeordnete Namen der Datentabellen enthalten, daß in der Tabelle der Relationen in an sich bekannter Weise die Relationen als Verbindungen zwischen jeweils zwei Datentabellen über jeweils zumindest ein Schlüsselfeld angegeben sind, und daß basierend auf besagtem baum, ein Zugriffspfad auf dem Datenträger enthalten ist, der ermittelt wird, indem zunächst über die Tabelle der Relationen zwischen jeweils zwei aufeinander folgenden, ausgewählten Datentabellen zumindest ein Teilzugriffspfad auf Basis der zwischen den aufeinander folgenden Datentabellen vorhandenen Relationen berechnet wird, und dann aus allen errechneten Teilzugriffspfaden der Zugriffspfad zusammengesetzt wird, wobei anhand des mit der Tabelle der Relationen ermittelten Zugriffspfades relationenorientierte Operationen in die angegebene Datenbankanweisung eingesetzt werden, wodurch sich ein SQL-Statement ergibt, welches von jedem den SQL-Standard unterstützenden Datenbanksystem verarbeitet werden kann.

9. Datenträger nach Anspruch 8 und zum Einlesen in ein relationales Datenbanksystem nach Anspruch 7, **dadurch gekennzeichnet, daß** der Datenträger Datenbankanweisungen enthält, in die ein nach dem Verfahren nach Anspruch 1 bis 6 ermittelter Zugriffspfad eingesetzt worden ist, der zur Steuerung des Datenbanksystems durch die Datenbankanweisung zum Zugriff auf die relationale Datenbank verwendet wird.

10. Datenträger nach Anspruch 8 und zum Einlesen in ein relationales Datenbanksystem nach Anspruch 7, **dadurch gekennzeichnet, daß** der Zugriffspfad, der zur Steuerung des Datenbanksystems durch die Datenbankanweisung zum Zugriff auf die relationale Datenbank verwendet wird, separiert auf dem Datenträger angegeben ist, und der Zugriffspfad schrittweise auf die Datentabellen verweist, und zum Zugriff auf die Datenbank diesen Verweisen auf die Datentabellen schrittweise gefolgt wird.

11. Computerprogramm, das Instruktionen aufweist, die zur Durchführung des Verfahrens nach einem der Ansprüche 1 bis 6 eingerichtet sind.

12. Computerprogrammprodukt welches ein computerlesbares Medium mit Computerprogramm-Code-Mitteln aufweist, bei dem jeweils nach Laden des Computer programms ein Computer durch das Programm zur Durchführung des Verfahren nach einem der Ansprüche 1 bis 6 veranlaßt wird.

13. Computerprogrammprodukt, welches ein Computerprogramm auf einem elektronischen Trägersignal aufweist, bei dem jeweils nach Laden des Computerprogramms ein Computer durch das Programm zur Durchführung des Verfahrens nach einem der Ansprüche 1 bis 6 veranlaßt wird.

## Claims

1. A method for controlling a relational database system by executing a database query in a relational database which contains, as an associated data structure, a plurality of data tables interconnected through relations, by using a database language, with a table of the relations being provided, and with a processable database statement being created, which does not contain any relation-related operations, and an access path being determined, which concretely states the order of access to the database,
**characterized in that**
- the database statement created contains only processing functions, data tables and their columns to which the processing functions are to be applied as well as the order and levels of hierarchy according to which the processing is to take place,
wherein the order and levels of hierarchy of the data tables used are represented in the form of an ordered tree, and the root of the ordered tree contains all names of the data tables of the superordinate query only, and subordinate sub-queries are subordinate to the root and listed in the tree-structure as nodes, which contain names of the data tables associated with the sub-queries,
- in the table of relations, the relations are indicated as links between two data tables each via at least one key field in a manner known per se,
- the access path based on said tree is determined by first computing at least a partial access path, via the table of relations, between each two subsequent, selected data tables on the basis of the relations which exist between the subsequent data tables, and then assembling the access path from all computed partial access paths,
- relation-oriented operations are introduced into the database statement by means of the access path, which has been determined using the table of relations, producing a SQL statement which can be processed by any database system supporting the SQL standard.

2. The method according to claim 1, **characterized in that** said table of relations contains all relations corresponding to the data structure associated with the database queried and may furthermore contain freely generated relations.

3. The method according to claim 1 or claim 2, **characterized in that**, for the purpose of determining said partial access paths, said table of relations is read into a graph based on the theory of graphs and said partial access paths are computed using the thus formed graph.

4. The method according to claim 1, 2 or 3, **characterized in that** relation-oriented operations are introduced in the database statement by means of said access path.

5. The method according to claim 1, 2 or 3, **characterized in that** said determined access path, which provides step by step references to data tables, may be separately indicated in the database statement, and for accessing the database, said references to the data tables are followed step by step.

6. The method according to any one of claims 1 to 5, **characterized in that**
- from a database statement for a first database having a first data structure associated therewith, the associated first relation-oriented operations are eliminated,
- second relation-oriented operations are introduced into said database statement which has been cleared of said first relations, said second relation-oriented operations corresponding to a second data structure which is associated with a second database,
- the query is executed on the basis of said database statement which includes said second relation-oriented operations by determining said partial access paths, using the associated table of the second relation-oriented operations, and assembling them to obtain an access path.

7. A relational database system comprising a computer system with a relational database, a data processing unit and a memory, said data processing unit working according to the method of any one of claims 1 to 6.

8. A data carrier having a database statement formulated in a database language for controlling and reading into a relational database system according to claim 7, **characterized in that** said database statement present on the data carrier is created by only indicating processing functions, data tables and their columns to which the processing functions are to be applied as well as the order and levels of hierarchy according to which the processing is to take place, wherein the order and levels of hierarchy of the data tables used are represented in the form of an ordered tree, and the root of the ordered tree contains all names of the data tables of the superordinate query only, and subordinate sub-queries are subordinate to the root and listed in the tree-structure as nodes, which contain names of the data tables associated with the sub-queries, indicating, in the table of relations, the relations as links between two data tables each via at least one key field in a manner known per se, and the data carrier containing an access path based on said tree which is determined by first computing at least a partial access path, via the table of relations, between each two subsequent, selected data tables on the basis of the relations which exist between the subsequent data tables, and then assembling the access path from all computed partial access paths, wherein relation-oriented operations are introduced into the database statement by means of the access path, which has been determined using the table of relations, producing a SQL statement which can be processed by any database system supporting the SQL standard.

9. The data carrier according to claim 8 for reading into a relational database system according to claim 7, **characterized in that** said data carrier includes database statements in which an access path, determined according to the method of any one of claims 1 to 6, has been introduced which is used to control said database system through said database statement for accessing said relational database.

10. The data carrier according to claim 8 for reading into a relational database system according to claim 7, **characterized in that** said access path, which is used to control said database system through said database statement for accessing said relational database, is indicated separately on said data carrier, with said access path providing step by step references to data tables and said references to the data tables being followed step by step in order to access the database.

11. A computer program having instructions which are adapted to execute the method according to any one of claims 1 to 6.

12. A computer program product having a computer-readable medium with computer program encoding means, wherein a computer is caused by the program to execute the method according to any one of claims 1 to 6 after the computer program has been loaded.

13. A computer program product having a computer program on an electronic carrier signal, wherein a computer is caused by the program to execute the method according to any one of claims 1 to 6 after the computer program has been loaded.

## Revendications

1. Procédé pour contrôler un système de base de données relationnelle par l'exécution d'une recherche de base de données dans une base de données relationnelle contenant, comme structure de données attribuée, une pluralité de tableaux de données liés par des relations en utilisant un langage de base de données, un tableau des relations étant disponible et une instruction de base de données traitable qui ne contient pas d'opérations liées aux relations étant créée et un chemin d'accès qui indique concrètement un ordre d'accès à ladite base de données étant établi,
**caractérisé en ce**
- **que** ladite instruction de base de données ne contient que des fonctions de traitement, des tableaux de données et leurs colonnes auxquelles lesdites fonctions de traitement seront appliquées, ainsi que l'ordre et les échelons de la hiérarchie du traitement,
l'ordre et les échelons de la hiérarchie des tableaux de données utilisés étant représentés en forme d'un arbre ordonné et la racine dudit arbre ordonné ne contenant que tous les noms des tableaux de données de la recherche superordonnée et des recherches subordonnées étant inscrites dans la structure d'arbre à des positions subordonnées par rapport à ladite racine en forme de noeuds qui contiennent les noms des tableaux de données attribués aux recherches subordonnées,
- **que** dans le tableau des relations, d'une façon connu, chacune des relations est indiquée comme un lien entre deux tableaux de données via au moins une cellule clé,
- **que**, basé sur dudit arbre, le chemin d'accès est établi en calculant premièrement, via le tableau des relations, au moins un chemin d'accès partiel entre deux tableaux de données successifs sélectionnés, basé sur les relations entre lesdits tableaux de données successifs, et, puis, en assemblant ledit chemin d'accès en utilisant tous les chemins d'accès partiels calculés,
- **que** des opérations liées aux relations sont introduites dans l'instruction de base de données à l'aide du chemin d'accès établi à partir du tableau des relations, ce qui fournit une instruction SQL qui peut être traitée par tout système de base de donnés qui soutient le standard SQL.

2. Procédé selon la revendication 1 **caractérisé en ce que** ledit tableau des relations contient tous les relations qui correspondent à la structure de données attribuée à la base de données recherchée ainsi que, selon le cas, des relations librement créées.

3. Procédé selon la revendication 1 ou 2 **caractérisé en ce que**, pour déterminer lesdits chemins d'accès partiels, ledit tableau des relations est chargé dans un graphe basé sur la théorie des graphes et que lesdits chemins d'accès partiels sont calculés à l'aide du graphe ainsi constitué.

4. Procédé selon la revendication 1, 2 ou 3 **caractérisé en ce que**, sur la base dudit chemin d'accès, des opérations liées aux relations sont introduites dans ladite instruction de base de données.

5. Le procédé selon la revendication 1, 2 ou 3 **caractérisé en ce que** le chemin d'accès déterminé qui réfère étape par étape au tableau de données est indiqué séparément dans ladite instruction de base de données et que, pour accéder à la base de données, on suive les références fournies étape par étape.

6. Procédé selon l'une des revendications 1 à 5 **caractérisé en ce**
- **que**, dans une instruction de base de données pour une première base de données avec une première structure de données attribuée, les premières opérations liées aux relations qui y correspondent sont éliminées,
- **que** des secondes opérations liées aux relations sont introduites dans ladite instruction de base de données de laquelle les premières relations ont été éliminées , lesdites secondes opérations liées aux relations correspondant à une seconde structure de données attribuée à une seconde base de données,
- **que** la recherche est exécutée sur la base de ladite instruction de base de données qui contient les secondes opérations liées aux relations en déterminant lesdits chemins d'accès à l'aide du tableau correspondant des secondes relations et en les assemblant pour établir un chemin d'accès.

7. Système de base de données relationnelle comprenant un système informatique avec une base de données relationnelle, une unité de traitement de données et une mémoire, ladite unité de traitement de données fonctionnant conformément au procédé selon l'une des revendications 1 à 6.

8. Support de données avec une instruction pour une base de données formulée dans un langage de base de données pour contrôler et être chargé dans un système de base de données selon la revendication 7 **caractérisé en ce que** ladite instruction pour une base de données présente sur ledit support de données ne comprend pas d'opérations liées aux relations, mais indique seulement des fonctions de traitement, des tableaux de données et leurs colonnes auxquelles lesdites fonctions de traitement seront appliquées, ainsi que l'ordre et les échelons de la hiérarchie du traitement, ledit ordre et lesdits échelons de la hiérarchie des tableaux de données utilisés étant représentés en forme d'un arbre ordonné et la racine dudit arbre ordonné ne contenant que tous les noms des tableaux de données de la recherche superordonnée et des recherches subordonnées étant inscrites dans la structure d'arbre à des positions subordonnées par rapport à ladite racine en forme de noeuds qui contiennent les noms des tableaux de données attribués aux recherches subordonnées, que, d'une façon connu, chacune des relations est indiquée comme un lien entre deux tableaux de données via au moins une cellule clé, et que, basé sur dudit arbre, le chemin d'accès est établi en calculant premièrement, via le tableaux des relations, au moins un chemin d'accès partiel entre deux tableaux de données successifs sélectionnés, basé sur les relations entre lesdits tableaux de données successifs, et, puis, en assemblant ledit chemin d'accès en utilisant tous les chemins d'accès partiels calculés, des opérations liées aux relations étant introduites dans l'instruction de base de données à l'aide du chemin d'accès établi à partir du tableau des relations, ce qui fournit une instruction SQL qui peut être traitée par tout système de base de donnés qui soutient le standard SQL.

9. Support de données selon la revendication 8 et pour être chargé dans un système de base de données relationnelle selon la revendication 7 **caractérisé en ce que** ledit support de données comprend des instructions de base de données dans lesquelles un chemin d'accès qui est déterminé conformément au procédé selon l'une des revendications 1 à 6 et qui est utilisé pour contrôler le système de base de données à l'aide de ladite instruction de base de données pour l'accès à la base de données relationnelle a été introduit.

10. Support de données selon la revendication 8 et pour être chargé dans un système de base de données relationnelle selon la revendication 7 **caractérisé en ce que** ledit chemin d'accès qui est utilisé pour contrôler le système de base de données à l'aide de ladite instruction de base de données pour l'accès à la base de données relationnelle est indiqué séparément sur ledit support de données et que ledit chemin d'accès réfère étape par étape aux tableaux de données et, pour accéder à la base de données, on suive les références fournies étape par étape.

11. Programme informatique comprenant des instructions pour l'exécution du procédé selon l'une des revendications 1 à 6.

12. Produit de programme informatique comprenant un médium lisible par ordinateur avec des moyens pour encoder un programme informatique, ledit programme, après avoir été chargé, amenant un ordinateur à exécuter le procédé selon l'une des revendications 1 à 6.

13. Produit de programme informatique comprenant un programme informatique sur un signal de support électronique, ledit programme, après avoir été chargé, amenant un ordinateur à exécuter le procédé selon l'une des revendications 1 à 6.
